# EUROPEAN PATENT SPECIFICATION

(11) **EP 1 136 244 B1**
(45) Date of publication and mention of the grant of the patent: **02.06.2004**
(21) Application number: 00106254.6
(22) Date of filing: 22.03.2000
(51) Int. Cl.: B29D 31/515, A43B 3/12, A43B 13/04, A43B 13/18

(54) **Method for manufacturing shoes with foamed soles**
Verfahren zur Herstellung eines Schuhes mit Schaumsohle
Procédé de réalisation d'une chaussure avec une semelle moulée par moussage

(43) Date of publication of application: 26.09.2001
(73) Proprietor: Chi, Cheng-Hsian, Taichung (TW)
(72) Inventor: Chi, Cheng-Hsian, Taichung (TW)
(74) Representative: WILHELMS, KILIAN & PARTNER Patentanwälte

(56) References cited:
- EP-A- 0 839 637
- DE-A- 1 685 336
- FR-A- 999 645
- FR-A- 2 553 636
- US-A- 5 787 608
- US-A- 5 843 352

## Description

### FIELD OF THE INVENTION

The present invention relates to a method for manufacturing shoes with foamed soles.

### DESCRIPTION OF THE RELATED ART

The closest prior art of which the applicant is aware is disclosed in his U.S. Patent No. 5,843,352, entitled by "PRODUCTION METHOD FOR PERIPHERAL ORNAMENTAL STRIPS FOR FOAMED INSOLES":

However, in said prior art reference, the foamed insole and the ornament strips are respectively foamed, and are then coupled together with each other so that it needs to provide molds or machines of much cost, and the manufacturing process is more complex.

### SUMMARY OF THE INVENTION

In accordance with one aspect of the present invention, there is provided a method for manufacturing shoes with foamed soles comprising the steps of: (a) providing a foamable mixture; (b) heating and foaming the foamable mixture to form a foamed insole blank; (c) providing a sole; (d) providing a shoe tree; (e) providing a vamp on the shoe tree; (f) placing the sole coated with glue, the foamed insole blank coated with glue, the vamp, and the shoe tree into a pressing mold for pressing and bonding them together; (g) heating an outer periphery of the foamed insole blank locally; and (h) pressing the outer periphery of the foamed insole blank so as to form knurls on the outer periphery of the foamed insole blank, thereby forming a final shoe product.

According to an embodiment of the present invention, the method includes heating and foaming the foamable mixture to form an elongated flat foamed body, and then cutting the foamed body into a plurality of foamed insole blank.

According to another embodiment of the present invention, the method includes forming the foamable mixture into an insole blank with a scale-down size, and then heating and foaming the insole blank into a foamed insole blank.

In accordance with another aspect of the present invention, there is provided a method for manufacturing shoes with foamed soles comprising the steps of: (a) providing a vamp on a shoe tree; (b) providing a bottom pad on the vamp; (c) providing a heated foamed insole blank on a bottom of the vamp; (d) providing a peripheral flange on a periphery of the foamed insole blank; (e) providing a sole coated with glue on the foamed insole blank; (f) providing a bottom mold base on the sole; (g) placing the sole, the foamed insole blank, and the vamp between the bottom mold base and the shoe tree for pressing and bonding the sole, the foamed insole blank, and the vamp together; and (h) pressing the periphery of the heated foamed insole blank so as to form knurls on the periphery of the foamed insole blank, thereby forming a final shoe product.

The method further comprises the steps of: providing an ornamental strip bonded on a periphery of the vamp; providing a pull line around a periphery of the ornamental strip; mounting the peripheral flange of the foamed insole blank between the vamp and the ornamental strip; and tightening the pull line such that the ornamental strip securely encompass the foamed insole blank.

The step (h) further includes the steps of: providing a pair of pivotally connected mold clamps to press the periphery of the foamed insole blank for forming knurls on the periphery of the foamed insole blank; providing a corrugated peripheral profile on a top edge of each of the pair of mold clamps; providing two side mold bases to press the foamed insole blank for forming knurls on the periphery of the foamed insole blank; and providing a corrugated peripheral profile on a bottom edge of each of the two side mold bases and mating the corrugated peripheral profile of the top edge of each of the pair of mold clamps so as to precisely form knurls on the periphery of the foamed insole blank.

In accordance with a further aspect of the present invention, there is provided a method for manufacturing shoes with foamed soles comprising the steps of: (a) providing a shoe tree; (b) providing a heated foamed insole blank on the shoe tree and having two opposite sides; (c) providing two connecting pieces on each of the two opposite sides of the foamed insole blank; (d) providing a sole coated with glue on the foamed insole blank; (e) providing a bottom mold base on the sole; (f) placing the sole and the foamed insole blank between the bottom mold base and the shoe tree for pressing and bonding the sole and the foamed insole blank together; (g) pressing a periphery of the heated foamed insole blank so as to form knurls on the periphery of the foamed insole blank; and (h) bonding a sandal vamp to the connecting pieces of the foamed insole blank, thereby forming a final shoe product.

The method further comprises the steps of: providing a plurality of slots in the periphery of the foamed insole blank; providing a plurality of connecting plates on a periphery of the sandal vamp; providing a pull line on each of the connecting plates; moving each of the connecting plates to extend through each of the slots of the foamed insole blank; bending each of the connecting plates to press a bottom of the foamed insole blank; and tightening the pull line of each of the connecting plates for securing the foamed insole blank and the sandal vamp together.

In accordance with a further aspect of the present invention, there is provided a method for manufacturing shoes with foamed soles comprising the steps of: providing a foamable mixture of ethylene vinyl acetate E.V.A., a foaming component blowing agent and a binder cross-linking agent which are prepared and stirred; heating and foaming the foamable mixture to form a heated foamed insole blank; the foamed insole blank being processed by an initial pattern generating step for facilitating embedding a shock absorbing pad in a recess defined in the top edge of the foamed insole blank; providing a sole; providing a shoe tree; providing a vamp fitted on the shoe tree; placing the sole coated with glue, the foamed insole blank coated with glue, the vamp, and the shoe tree into a set of pressing molds which are upward and downward slidable relative to each other for vertically pressing and bonding them together so that the shoe parts are integrally bonded and pressingly formed; heating an outer periphery of the foamed insole blank locally by a heating machine; and pressing the outer periphery of the foamed insole blank by two side pattern generating molds horizontally moving toward each other so as to form knurls on the outer periphery of the foamed insole blank, thereby forming a final shoe product.

The heated foamed insole blank can also be placed in a pattern generating mold so that the heated foamed insole blank can be pressed into a foamed insole semi-product by a pattern pressing process.

Further benefits and advantages of the present invention will become apparent after a careful reading of the detailed description with appropriate reference to the accompanying drawings.

### BRIEF DESCRIPTION OF THE DRAWINGS

Fig. 1 is a perspective view of a foamed insole blank in accordance with the present invention;
Fig. 2 is a perspective view of a foamed insole blank in accordance with another embodiment of the present invention;
Fig. 3 is an exploded view of one of a pair of shoes in accordance with the present invention;
Fig. 4 is a perspective assembly view of the shoe as shown in Fig. 3;
Fig. 5 is an exploded view of one of a pair of shoes in accordance with another embodiment of the present invention;
Fig. 6 is a side plan partially cross-sectional view of the shoe as shown in Fig. 5;
Fig. 7 is an operational view of the shoe as shown in Fig. 6;
Fig. 8 is an assembly view of the shoe as shown in Fig. 6;
Fig. 9 is an exploded view of one of a pair of shoes in accordance with a further embodiment of the present invention;
Fig. 10 is a view of the shoe as shown in Fig. 9;
Fig. 11 is a perspective view of a pair of mold clamps of the shoe as shown in Fig. 9;
Fig. 12 is a front plan partially cross-sectional view of the shoe as shown in Fig. 9;
Fig. 13 is a front plan view of the shoe as shown in Fig. 9;
Fig. 14 is an exploded view of one of a pair of shoes in accordance with a further embodiment of the present invention;
Fig. 15 is a front plan partially cross-sectional assembly view of the shoe as shown in Fig. 14;
Fig. 16 is a front plan partially cross-sectional assembly view of the shoe as shown in Fig. 14;
Fig. 17 is a front plan partially cross-sectional assembly view of the shoe as shown in Fig. 14;
Fig. 18 is an exploded view of one of a pair of shoes in accordance with a further embodiment of the present invention;
Fig. 19 is a perspective assembly view of the shoe as shown in Fig. 18;
Fig. 20 is a front plan partially cross-sectional assembly view of the shoe as shown in Fig. 18;
Fig. 21 is a top plan assembly view of the shoe as shown in Fig. 18; and
Fig: 22 is an exploded view of one of a pair of shoes in accordance with a further embodiment of the present invention.

### DETAILED DESCRIPTION OF THE INVENTION

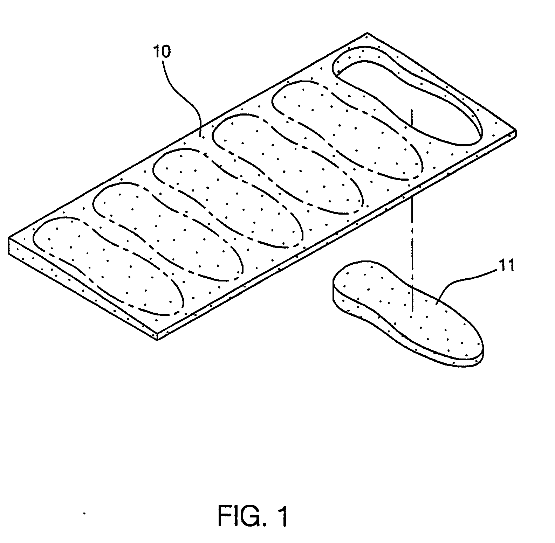

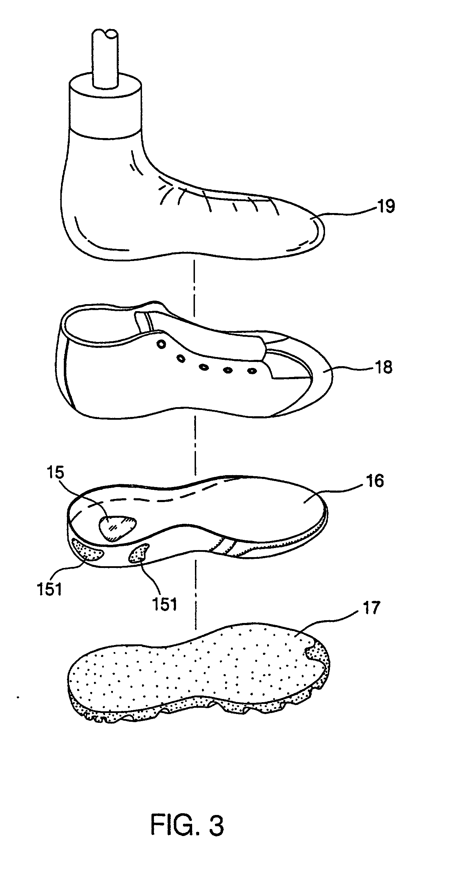

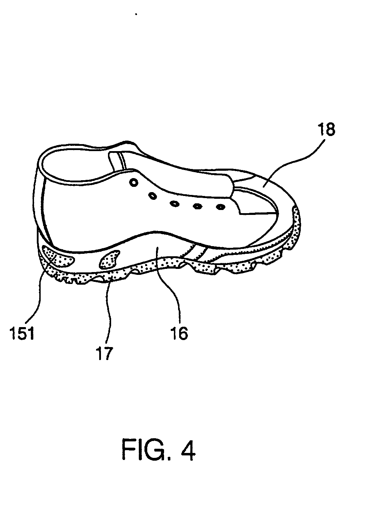

Referring to the drawings and initially to Figs. 1-4, a method in accordance with the present invention is used for manufacturing foamed shoes and comprises the steps of: (a) providing a foamable mixture of ethylene vinyl acetate (E.V.A.), a foaming component (blowing agent) and a binder (cross-linking agent) which are prepared and stirred; (b) heating and foaming the foamable mixture to form a foamed insole blank 11 (or 13); (c) providing a sole 17; (d) providing a shoe tree 19; (e) providing a vamp 18 on the shoe tree 19; (f) placing the sole 17 coated with glue, the foamed insole blank 11 (or 13) coated with glue, the vamp 18, and the shoe tree 19 into a pressing mold (not shown) for pressing and bonding them together; (g) heating an outer periphery of the foamed insole blank locally; and (h) pressing the outer periphery of the foamed insole blank by a pattern generating mold (not shown) so as to form knurls on the outer periphery of the foamed insole blank 11 (or 13), thereby forming the parts as shown in Fig. 3 into a final shoe product as shown in Fig. 4.

The method also comprises the step of: pressing a shock absorbing pad 15 into a recess 14 defined in the foamed insole blank for providing a shock absorbing function; and pressing a plurality of ornamental plates 151 onto the outer periphery of the foamed insole blank for providing a decorative function.

As shown in Fig. 1, in accordance with an embodiment of the present invention, the step (b) includes heating and foaming the foamable mixture to form an elongated flat foamed body 10, and then cutting the foamed body 10 into a plurality of foamed insole blank 11.

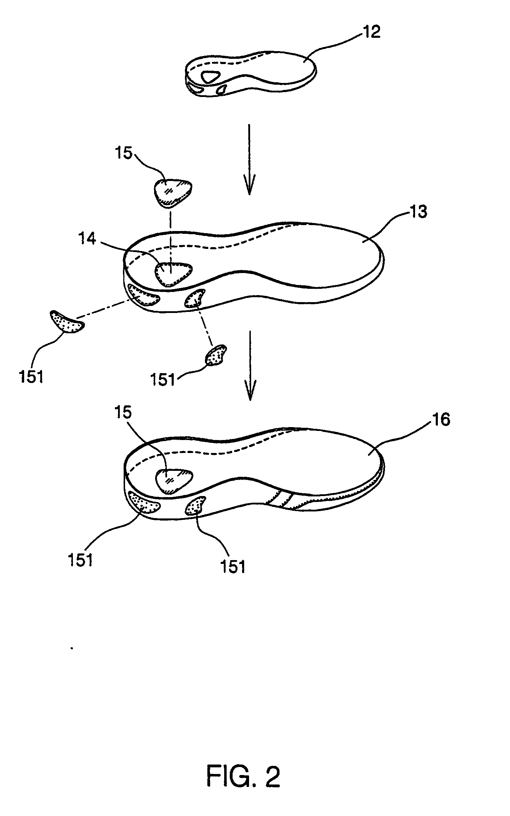

As shown in Fig. 2, in accordance with another embodiment of the present invention, the step (b) includes forming the foamable mixture into an insole blank 12 with a scale-down size, and then heating and foaming the insole blank 12 into a foamed insole blank 13 by a heat forming mold (not shown).

The method further comprises the step of: filling a thermoplastic foamable material made of polyurethane (P.U.) between the foamed insole blank 13 and the vamp 18. In such a manner, the P.U. thermoplastic foamable material can be foamed in the hollow air cells (not shown) contained in the foamed insole blank 13 so that the foamed insole blank 13 is integrally filled and formed with P.U. thermoplastic foamable material.

The foamed insole blank 13 pressed in the pattern generating mold (not shown) will form knurls on the outer periphery of the foamed insole blank 13, thereby forming a semi-final product of foamed insole 16 with knurls and various patterns thereon.

As shown in Fig. 3, a method for manufacturing foamed shoes comprises the steps of: providing a foamable mixture of ethylene vinyl acetate E.V.A., a foaming component blowing agent and a binder cross-linking agent which are prepared and stirred; heating and foaming the foamable mixture to form a heated foamed insole blank 16; the foamed insole blank being processed by an initial pattern generating step for facilitating embedding a shock absorbing pad 15 in a recess defmed in the top edge of the foamed insole blank 16; providing a sole 17; providing a shoe tree 19; providing a vamp 18 fitted on the shoe tree 19; placing the sole 17 coated with glue, the foamed insole blank coated with glue, the vamp 18, and the shoe tree 19 into a set of pressing molds (not shown) which are upward and downward slidable relative to each other for vertically pressing and bonding them together so that the shoe parts are integrally bonded and pressingly formed; heating an outer periphery of the foamed insole blank 16 locally by a heating machine (not shown); and pressing the outer periphery of the foamed insole blank 16 by two side pattern generating molds (not shown) horizontally moving toward each other so as to form knurls on the outer periphery of the foamed insole blank 16, thereby forming a final shoe product as shown in Fig. 4.

The heated foamed insole blank can also be placed in a pattern generating mold so that the heated foamed insole blank can be pressed into a foamed insole semi-product by a pattern pressing process. The shoe tree 19 is preferably a pneumatic shoe tree structure. The foamed insole blank has a width slightly greater than that of the cavity wall of the pattern generating molds. The foamed insole blank can also be made with a hollow air cell structure so that when the insole blank is placed in the pattern generating molds, the air cells are inflated and pressed to form an inflatable foamed insole.

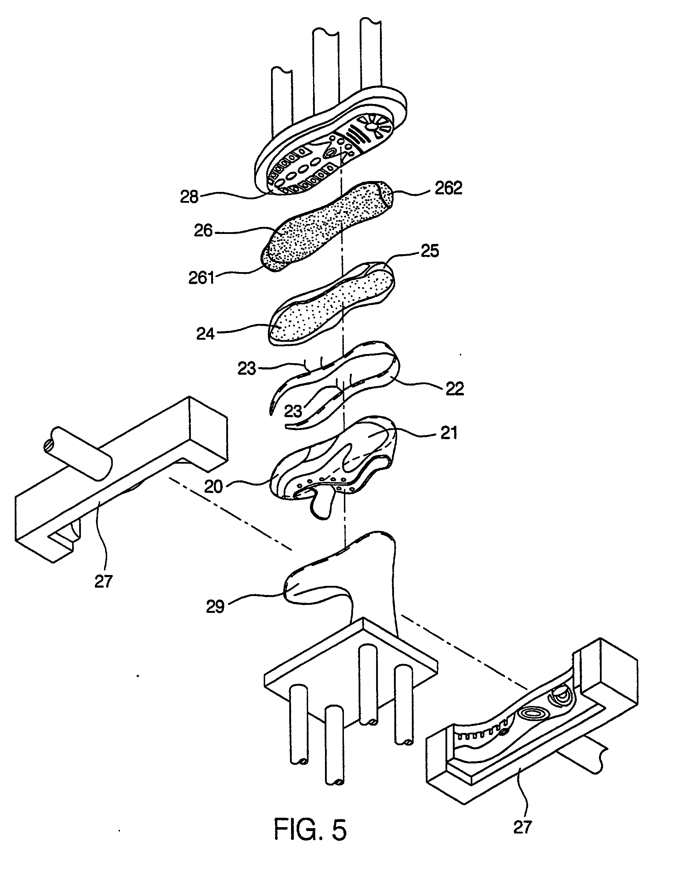

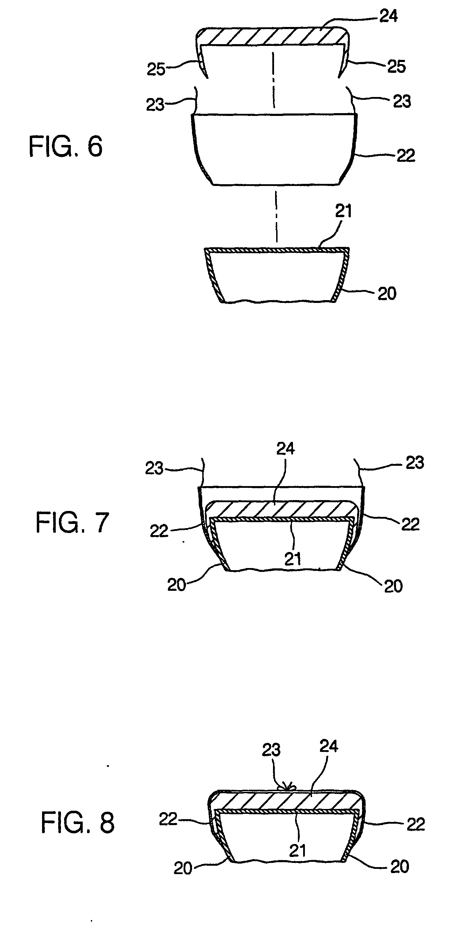

Referring to Figs. 5-8, in accordance with another embodiment of the present invention, the method used for manufacturing foamed shoes comprises the steps of: providing a vamp 20 mounted on a shoe tree 29; providing a bottom pad 21 on the vamp 20; providing a heated foamed insole blank 24 on a bottom of the vamp 20; providing a peripheral flange 25 on a periphery of the foamed insole blank 24; providing an ornamental strip 22 bonded on a periphery of the vamp 20; providing a pull line 23 around a periphery of the ornamental strip 22; mounting the peripheral flange 25 of the foamed insole blank 24 between the vamp 20 and the ornamental strip 22 as shown in Fig. 7; tightening the pull line 23 so that the ornamental strip 22 securely encompass the foamed insole blank 24 as shown in Fig. 8; providing a sole 26 coated with glue on the foamed insole blank 24; providing a bottom mold base 28 on the sole 26; placing the sole 26, the foamed insole blank 24, and the vamp 20 between the bottom mold base 28 and the shoe tree 29 to be pressed by a hydraulic or pneumatic cylinder (not shown) for pressing and bonding the sole 26, the foamed insole blank 24, and the vamp 20 together; and finally pressing the periphery of the heated foamed insole blank 24 so as to form knurls on the periphery of the foamed insole blank 24, thereby forming a final shoe product.

The method further comprises the steps of: providing a leading guard 261 on a first end of the sole 26; and providing a trailing guard 262 on a second end of the sole 26. The method also includes providing two side mold bases 27 moved relative to each other by a hydraulic or pneumatic cylinder (not shown) so as to press the foamed insole blank 24 for forming knurls on the periphery of the foamed insole blank 24.

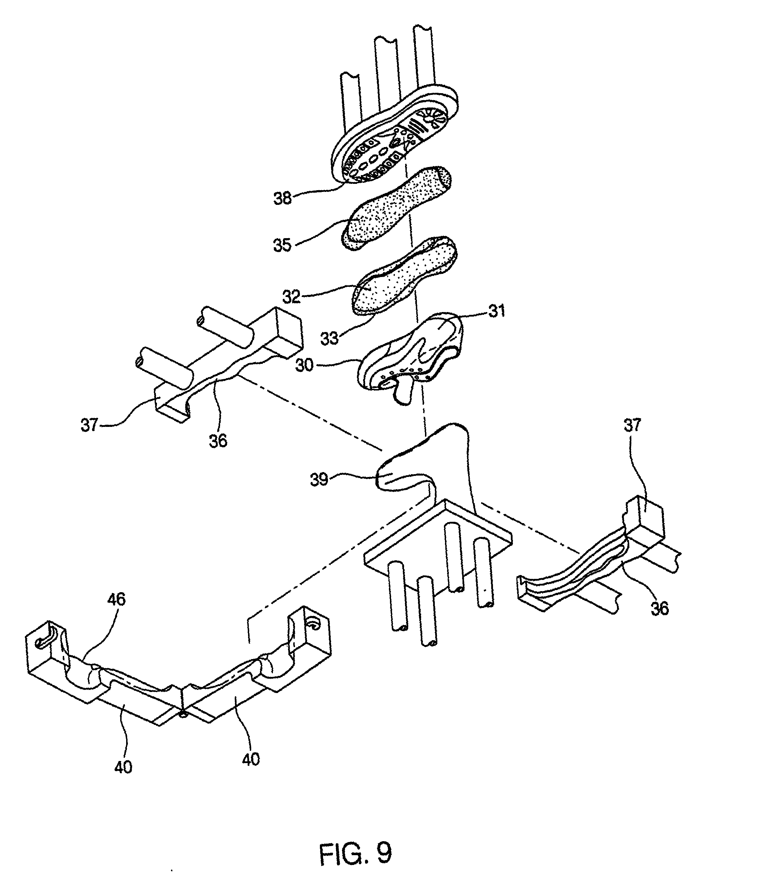

Referring to Figs. 9-13, in accordance with a further embodiment of the present invention, which is similar to the embodiment as shown in Fig. 5-8, the method used for manufacturing foamed shoes comprises the steps of: providing a vamp 30 mounted on a shoe tree 39; providing a bottom pad 31 on the vamp 30; providing a heated foamed insole blank 32 on a bottom of the vamp 30; providing a peripheral flange 33 on a periphery of the foamed insole blank 32; providing a sole 35 coated with glue on the foamed insole blank 32; providing a bottom mold base 38 on the sole 35; placing the sole 35, the foamed insole blank 32, and the vamp 30 between the bottom mold base 38 and the shoe tree 39 to be pressed by a hydraulic or pneumatic cylinder (not shown) for pressing and bonding the sole 35, the foamed insole blank 32, and the vamp 30 together; and finally pressing the periphery of the heated foamed insole blank 32 so as to form knurls on the periphery of the foamed insole blank 32, thereby forming a final shoe product.

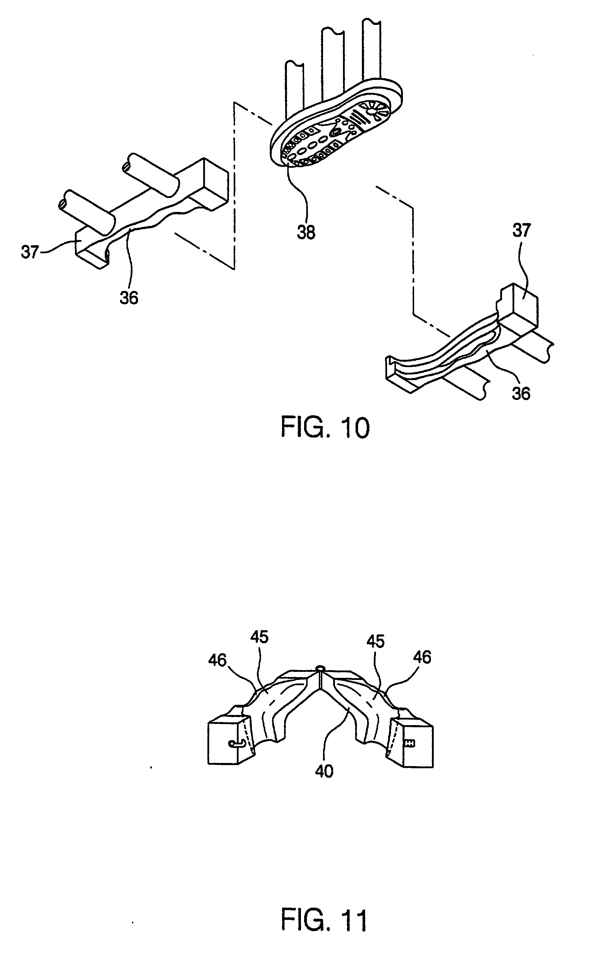

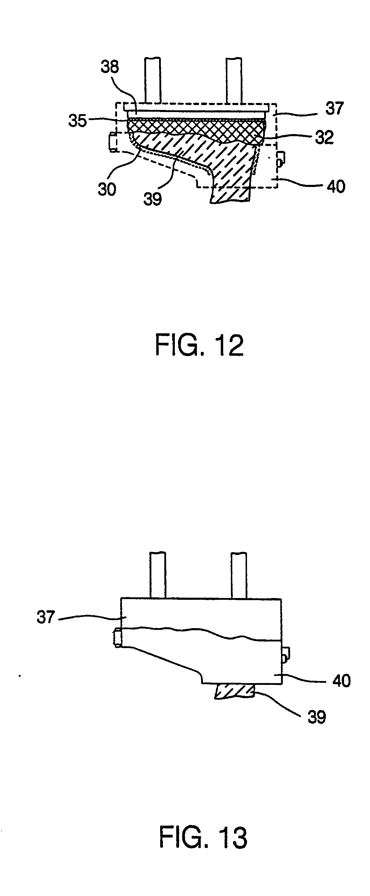

The method further comprises the steps of: providing a pair of pivotally connected mold clamps 40 to press the periphery of the foamed insole blank 32 for forming knurls on the periphery of the foamed insole blank 32; providing a corrugated peripheral profile 45 on a top edge 46 of each of the pair of mold clamps 40 as shown in Fig. 11; providing two side mold bases 37 to press the foamed insole blank 32 for forming knurls on the periphery of the foamed insole blank 32; and providing a corrugated peripheral profile 36 on a bottom edge of each of the two side mold bases 37 and mating the corrugated peripheral profile 45 of the top edge 46 of each of the pair of mold clamps 40 so as to precisely form knurls on the periphery of the foamed insole blank 32 as shown in Fig. 12.

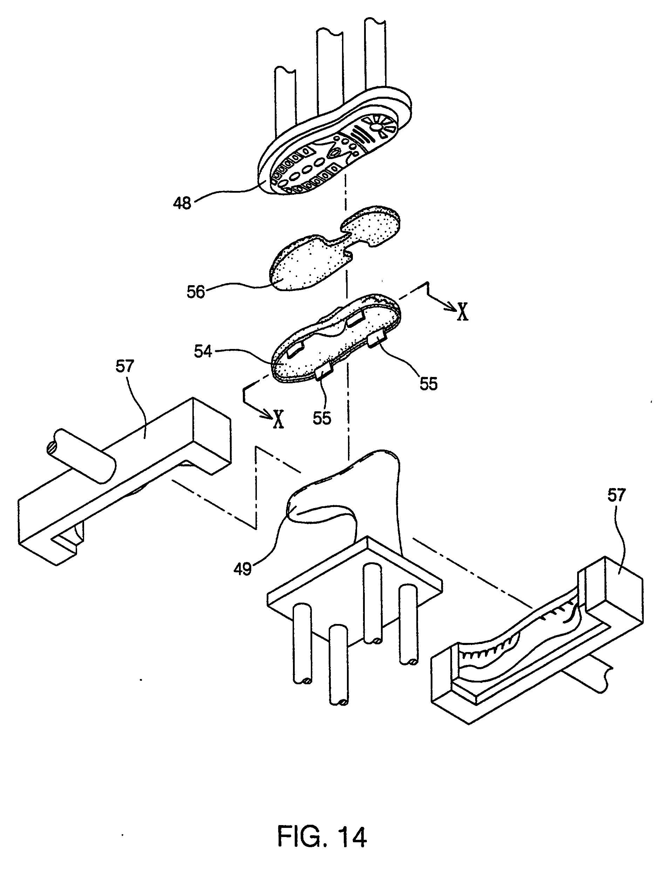

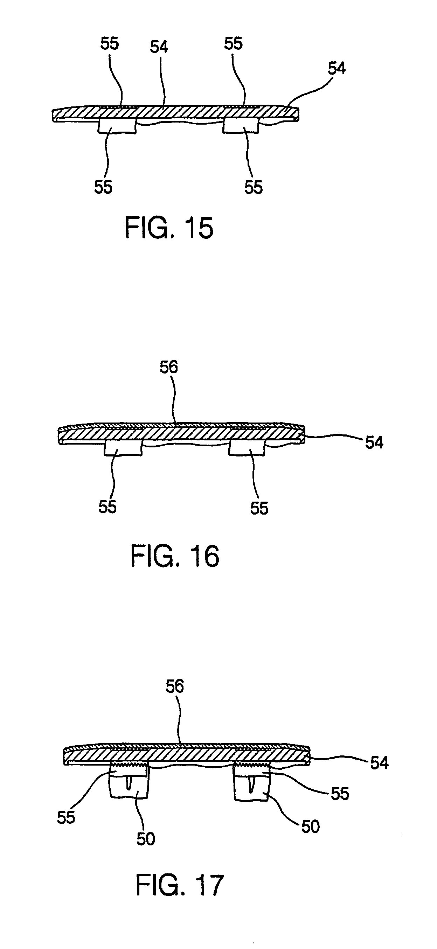

Referring to Figs. 14-17, in accordance with a further embodiment of the present invention, a method for manufacturing foamed sandal shoes comprising the steps of: (a) providing a shoe tree 49; (b) providing a heated foamed insole blank 54 on the shoe tree 49 and having two opposite sides; (c) providing two connecting pieces 55 on each of the two opposite sides of the foamed insole blank 54; (d) providing a sole 56 coated with glue on the foamed insole blank 54; (e) providing a bottom mold base 48 on the sole 56; (f) placing the sole 56 and the foamed insole blank 54 between the bottom mold base 48 and the shoe tree 49 for pressing and bonding the sole 56 and the foamed insole blank 54 together by a hydraulic or pneumatic cylinder; (g) pressing a periphery of the heated foamed insole blank 54 so as to form knurls on the periphery of the foamed insole blank 54; and (h) bonding a sandal vamp 50 (see Fig. 17) to the connecting pieces 55 of the foamed insole blank 54, thereby forming a final shoe product.

The method further includes providing two side mold bases 57 to press the foamed insole blank 54 for forming knurls on the periphery of the foamed insole blank 54.

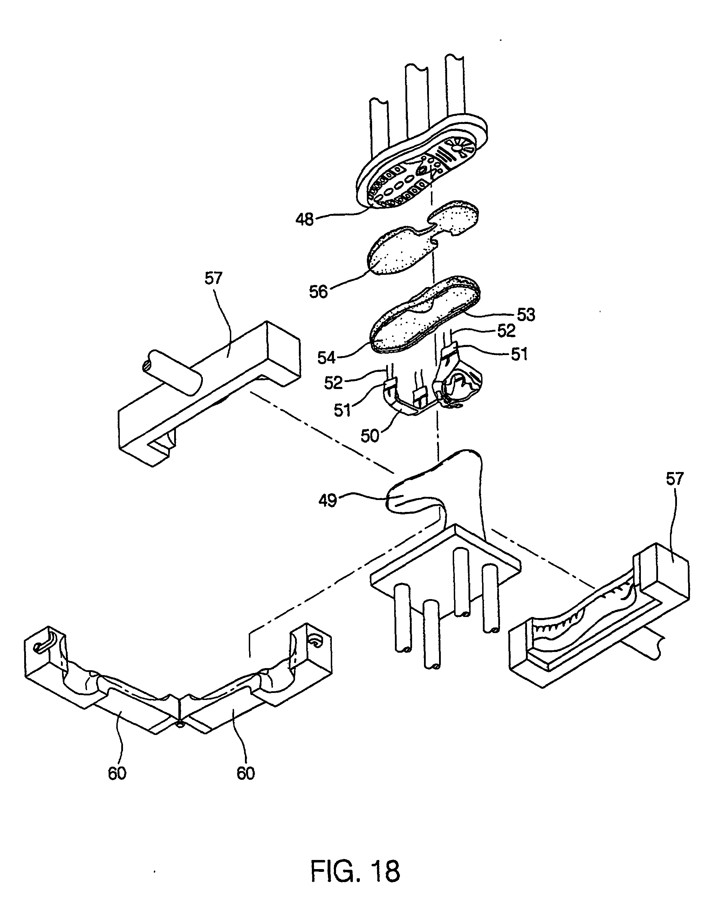

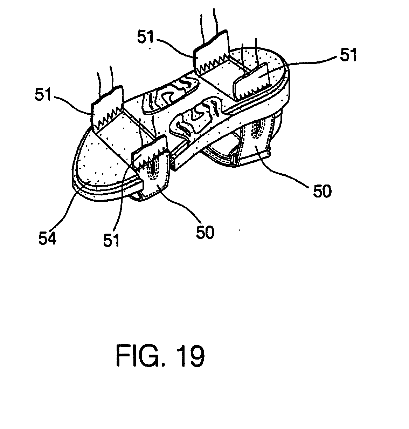

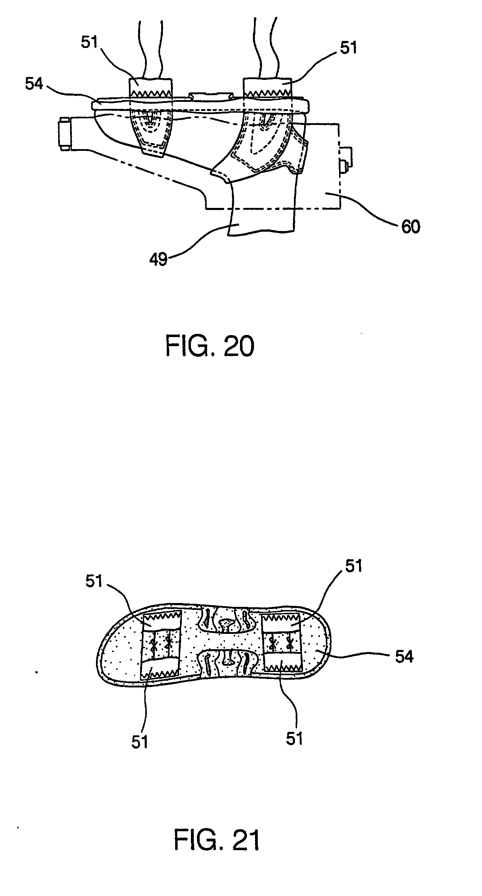

Referring to Figs. 18-21, in accordance with a further embodiment of the present invention, which is similar to the embodiment as shown in Fig. 14-17, the method further comprises the steps of: providing a plurality of slots 53 in the periphery of the foamed insole blank 54; providing a plurality of connecting plates 51 on a periphery of the sandal vamp 50; providing a pull line 52 on each of the connecting plates 51; moving each of the connecting plates 51 to extend through each of the slots 53 of the foamed insole blank 54; bending each of the connecting plates 51 to press a bottom of the foamed insole blank 54; and tightening the pull line 52 of each of the connecting plates 51 for securing the foamed insole blank 54 and the sandal vamp 50 together as shown in Fig. 21.

The method further includes providing a pair of pivotally connected mold clamps 60 to press the periphery of the foamed insole blank 54 for forming knurls on the periphery of the foamed insole blank 54 as shown in Fig. 20.

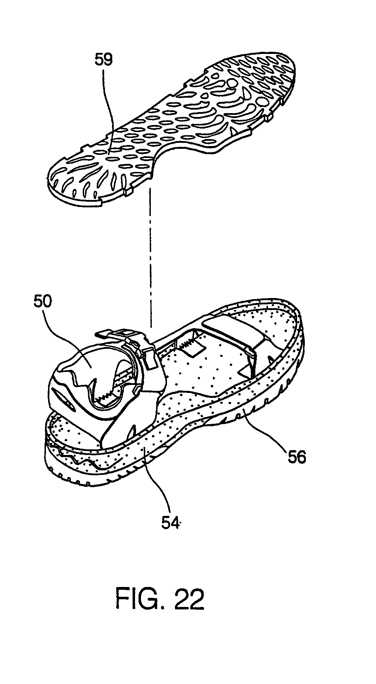

As shown in Fig. 22, a cushion 59 can be mounted on the top of the foamed insole blank 54.

Accordingly, according to the present invention, the foamed insole blank is integrally formed with the ornamental strips or plates, thereby greatly increasing the entirety of the shoes, and reinforcing the structure of the shoes so as to overcome the shortcoming of the conventional shoes of the prior art.

It should be clear to those skilled in the art that further embodiments may be made without departing from the scope of the present invention, as defined by the appended claims.

## Claims

1. A method for manufacturing shoes with foamed soles comprising the steps of:
(a) providing a foamable mixture;
(b) heating and foaming said foamable mixture to form a foamed insole blank;
(c) providing a sole (17);
(d) providing a shoe tree (19);
(e) providing a vamp (18) on said shoe tree (19);
(f) placing said sole (17) coated with glue, said foamed insole blank coated with glue, said vamp (18), and said shoe tree (19) into a pressing mold for pressing and bonding them together;
(g) heating an outer periphery of said foamed insole blank locally; and
(h) pressing said outer periphery of said foamed insole blank so as to form knurls on said outer periphery of said foamed insole blank, thereby forming a final shoe product.

2. The method in accordance with claim 1, further comprising the step of:
pressing a shock absorbing pad (15) into a recess (14) defined in said foamed insole blank.

3. The method in accordance with claim 1, further comprising the step of:
pressing a plurality of ornamental plates (151) onto said outer periphery of said foamed insole blank.

4. The method in accordance with claim 1, wherein said step (b) further includes heating and foaming said foamable mixture to form an elongated flat foamed body (10), and then cutting said foamed body (10) into a plurality of foamed insole blank (11).

5. The method in accordance with claim 1, wherein said step (b) further includes forming said foamable mixture into an insole blank (12) with a scale-down size, and then heating and foaming said insole blank (12) into a foamed insole blank (13).

6. The method in accordance with claim 1, further comprising the step of:
filling a thermoplastic foamable material made of polyurethane P.U. between said foamed insole blank and said vamp (18).

7. The method in accordance with claim 1, wherein said heated foamed insole blank can also be placed in a pattern generating mold so that said heated foamed insole blank can be pressed into a foamed insole semi-product by a pattern pressing process.

8. The method in accordance with claim 1, wherein said foamed insole blank can also be made with a hollow air cell structure so that when said insole blank is placed in said pattern generating molds, said air cells are inflated and pressed to form an inflatable foamed insole.

9. A method for manufacturing shoes with foamed soles comprising the steps of:
providing a foamable mixture of ethylene vinyl acetate E.V.A., a foaming component, in particular blowing agent, and a binder, in particular cross-linking agent, which are prepared and stirred; heating and foaming said foamable mixture to form a heated foamed insole blank; said foamed insole blank being processed by an initial pattern generating step for facilitating embedding a shock absorbing pad in a recess defined in the top edge of said foamed insole blank; providing a sole (17); providing a shoe tree (19); providing a vamp (18) fitted on said shoe tree (19); placing said sole (17) coated with glue, said foamed insole blank coated with glue, said vamp (18), and said shoe tree (19) into a set of pressing molds which are upward and downward slidable relative to each other for vertically pressing and bonding them together so that said shoe parts are integrally bonded and pressingly formed; heating an outer periphery of said foamed insole blank locally by a heating machine; and pressing said outer periphery of said foamed insole blank by two side pattern generating molds horizontally moving toward each other so as to form knurls on said outer periphery of said foamed insole blank, thereby forming a final shoe product.

10. A method for manufacturing shoes with foamed soles comprising the steps of:
(a) providing a vamp (20, 30) on a shoe tree;
(b) providing a bottom pad (21, 31) on said vamp;
(c) providing a heated foamed insole blank (24, 32) on a bottom of said vamp;
(d) providing a peripheral flange (25, 33) on a periphery of said foamed insole blank (24);
(e) providing a sole (26, 35) coated with glue on said foamed insole blank (24, 32);
(f) providing a bottom mold base (28, 38) on said sole;
(g) placing said sole (26, 35), said foamed insole blank (24, 32), and said vamp (20, 30) between said bottom mold base (28, 38) and said shoe tree for pressing and bonding said sole, said foamed insole blank, and said vamp together; and
(h) pressing said periphery of said heated foamed insole blank (24, 32) so as to form knurls on said periphery of said foamed insole blank, thereby forming a final shoe product.

11. The method in accordance with claim 10, wherein said step (h) further includes providing two side mold bases (27) to press said foamed insole blank for forming knurls on said periphery of said foamed insole blank.

12. The method in accordance with claim 10, further comprising the steps of:
providing an ornamental strip (22) bonded on a periphery of said vamp;
providing a pull line (23) around a periphery of said ornamental strip (22);
mounting said peripheral flange of said foamed insole blank between said vamp and said ornamental strip (22); and
tightening said pull line (23) such that said ornamental strip (22) securely encompass said foamed insole blank.

13. The method in accordance with claim 10, further comprising the steps of:
providing a leading guard (261) on a first end of said sole; and
providing a trailing guard (262) on a second end of said sole.

14. The method in accordance with claim 10, wherein said step (h) further includes the steps of:
providing a pair of pivotally connected mold clamps (40) to press said periphery of said foamed insole blank for forming knurls on said periphery of said foamed insole blank;
providing a corrugated peripheral profile (45) on a top edge (46) of each of said pair of mold clamps (40);
providing two side mold bases (37) to press said foamed insole blank for forming knurls on said periphery of said foamed insole blank; and
providing a corrugated peripheral profile (36) on a bottom edge of each of said two side mold bases (37) and mating said corrugated peripheral profile (46) of said top edge of each of said pair of mold clamps (40) so as to precisely form knurls on said periphery of said foamed insole blank.

15. A method for manufacturing shoes with foamed soles comprising the steps of:
(a) providing a shoe tree (49);
(b) providing a heated foamed insole blank (54) on said shoe tree (49) and having two opposite sides;
(c) providing two connecting pieces on each of said two opposite sides of said foamed insole blank (54);
(d) providing a sole (56) coated with glue on said foamed insole blank (54);
(e) providing a bottom mold base (48) on said sole (56);
(f) placing said sole (56) and said foamed insole blank (54) between said bottom mold base (48) and said shoe tree (49) for pressing and bonding said sole (56) and said foamed insole blank (54) together;
(g) pressing a periphery of said heated foamed insole blank (54) so as to form knurls on said periphery of said foamed insole blank (54); and
(h) bonding a sandal vamp (50) to said connecting pieces of said foamed insole blank (54), thereby forming a final shoe product.

16. The method in accordance with claim 15, wherein said step (g) further includes providing two side mold bases (57) to press said foamed insole blank (54) for forming knurls on said periphery of said foamed insole blank (54).

17. The method in accordance with claim 15, wherein said step (g) further includes providing a pair of pivotally connected mold clamps (60) to press said periphery of said foamed insole blank (54) for forming knurls on said periphery of said foamed insole blank (54).

18. The method in accordance with claim 15, further comprising the steps of:
providing a plurality of slots (53) in said periphery of said foamed insole blank (54);
providing a plurality of connecting plates (51) on a periphery of said sandal vamp (50);
providing a pull line (52) on each of said connecting plates (51);
moving each of said connecting plates (51) to extend through each of said slots (53) of said foamed insole blank (54);
bending each of said connecting plates (51) to press a bottom of said foamed insole blank (54); and
tightening said pull line (52) of each of said connecting plates (51) for securing said foamed insole blank (54) and said sandal vamp (50) together.

## Patentansprüche

1. Verfahren zum Herstellen von Schuhen mit geschäumten Sohlen, welches die Schritte umfasst:
(a) Bilden eines schäumbaren Gemisches;
(b) Erwärmen und Aufschäumen des schäumbaren Gemisches, um einen geschäumten Innensohlenrohling zu bilden;
(c) Bilden einer Sohle (17);
(d) Bilden eines Schuhleistens (19);
(e) Bilden eines Blatts (18) auf dem Schuhleisten (19);
(f) Anordnen der Sohle (17) mit Klebstoffüberzug, wobei der geschäumte Innensohlenrohling mit Klebstoff überzogen ist, des Blatts (18) und des Schuhleistens (19) in einer Pressform, um diese Bauteile zusammenzupressen und miteinander zu verbinden;
(g) Örtliches Erwärmen des Außenumfangs des geschäumten Innensohlenrohlings; und
(h) Pressen des Außenumfangs des geschäumten Innensohlenrohlings, derart, dass Riffelungen auf dem Außenumfang des geschäumten Innensohlenrohlings gebildet werden, wodurch ein fertiges Schuhprodukt gebildet wird.

2. Verfahren nach Anspruch 1, welches weiterhin den Schritt umfasst:
Pressen eines stoßabsorbierenden Kissens (15) in eine Ausnehmung (14), die im geschäumten Innensohlenrohling ausgebildet ist.

3. Verfahren nach Anspruch 1, welches weiterhin den Schritt umfasst:
Pressen einer Vielzahl von verzierten Platten (151) auf den Außenumfang des geschäumten Innensohlenrohlings.

4. Verfahren nach Anspruch 1, bei dem der Schritt (b) weiterhin das Erwärmen und Aufschäumen des schäumbaren Gemisches zur Bildung eines langgestreckten flachen Schaumkörpers (10) und das anschließende Schneiden des geschäumten Körpers (10) in eine Vielzahl von geschäumten Innensohlenrohlingen (11) einschließt.

5. Verfahren nach Anspruch 1, bei dem der Schritt (b) weiterhin das Formen des schäumbaren Gemisches zu einem verkleinerten Innensohlenrohling (12) und das anschließende Erwärmen des Innensohlenrohlings (12) zu einem geschäumten Innensohlenrohling (13) umfasst.

6. Verfahren nach Anspruch 1, welches weiterhin den Schritt umfasst:
Füllen eines thermoplastischen schäumbaren Materials aus Polyurethan P.U. zwischen den geschäumten Innensohlenrohling und das Blatt (18).

7. Verfahren nach Anspruch 1, bei dem der erwärmte geschäumte Innensohlenrohling auch in einer ein Muster erzeugenden Form angeordnet werden kann, so dass der erwärmte, geschäumte Innensohlenrohling zu einem geschäumten Innensohlenhalbfertigprodukt über ein Musterpressverfahren verpresst werden kann.

8. Verfahren nach Anspruch 1, bei dem der geschäumte Innensohlenrohling auch mit einer hohlen Luftzellenstruktur gebildet werden kann, so dass dann, wenn der Innensohlenrohling in den Muster erzeugenden Formen angeordnet wird, die Luftzellen aufgeblasen und verpresst werden, um eine aufblasbare geschäumte Innensohle zu bilden.

9. Verfahren zum Herstellen von Schuhen mit geschäumten Sohlen, welches die Schritte umfasst:
Bilden eines schäumbaren Gemisches aus Ethylenvinylacetat E.V.A., einer Schäumkomponente insbesondere eines Treibmittels sowie eines Bindemittels, insbesondere eines Vernetzungsmittels, die gebildet und verrührt werden, Erwärmen und Aufschäumen des schäumbaren Gemisches, um einen erwärmten geschäumten Innensohlenrohling zu bilden, welcher geschäumte Innensohlenrohling in einem Anfangsmustererzeugungsschritt verarbeitet wird, um das Einbetten eines stoßabsorbierenden Kissens in einer Aussparung zu erleichtern, die im oberen Rand des geschäumten Innensohlenrohlings begrenzt ist, Bilden einer Sohle (17), Bilden eines Schuhleistens (19), Bilden eines Blatts (18), das auf den Schuhleisten (19) gelegt wird, Anordnen der Sohle (17), die mit Klebstoff überzogen ist, des geschäumten Innensohlenrohlings mit Klebstoffüberzug, des Blatts (18) und des Schuhleistens (19) in einer Gruppe von Pressformen, die relativ zueinander nach oben und nach unten gleitend verschiebbar sind, um diese Bauteile vertikal zu verpressen und miteinander zu verbinden, so dass die Teile des Schuhs zu einem Stück verbunden und verpresst werden, örtliches Erwärmen des Außenumfangs des geschäumten Innensohlenrohlings durch eine Heizmaschine und Pressen des Außenumfangs des geschäumten Innensohlenrohlings durch zwei Seitenmuster erzeugende Formen, die horizontal aufeinander zu bewegt werden, um Riffelungen auf dem Außenumfang des geschäumten Innensohlenrohlings zu bilden und dadurch ein fertiges Schuhprodukt zu erzeugen.

10. Verfahren zum Herstellen von Schuhen mit geschäumten Sohlen, welches die Schritte umfasst:
(a) Vorsehen eines Blatts (20, 30) auf einem Schuhleisten;
(b) Vorsehen eines unteren Kissens (21, 31) am Blatt;
(c) Vorsehen eines erwärmten geschäumten Innensohlenrohlings (24, 32) an der Unterseite des Blatts;
(d) Vorsehen eines Umfangsflansches (25, 33) am Außenumfang des geschäumten Innensohlenrohlings (24);
(e) Vorsehen eines Sohle (26, 35), die mit Klebstoff beschichtet ist, auf dem geschäumten Innensohlenrohling (24, 32);
(f) Vorsehen einer unteren Formbasis (28, 38) auf der Sohle;
(g) Anordnen der Sohle (26, 35), des geschäumten Innensohlenrohlings (24, 32) und des Blatts (20, 30) zwischen der unteren Formbasis (28, 38) und dem Schuhleisten, um die Sohle, den geschäumten Innensohlenrohling und das Blatt zu verpressen und miteinander zu verbinden, und
(h) Pressen des Umfangs des erwärmten geschäumten Innensohlenrohlings (24, 32), um am Umfang des geschäumten Innensohlenrohlings Riffelungen zu erzeugen, wodurch ein fertiges Schuhprodukt gebildet wird.

11. Verfahren nach Anspruch 10, bei dem der Schritt (h) weiterhin das Vorsehen von zwei Seitenformbasen (27) umfasst, um den geschäumten Innensohlenrohling zur Bildung der Riffelungen am Außenumfang des geschäumten Innensohlenrohlings zu verpressen.

12. Verfahren nach Anspruch 10, welches weiterhin die Schritte umfasst:
Vorsehen eines Verzierungsstreifens (22), der mit dem Außenumfang des Blatts verbunden ist;
Vorsehen einer Zugschnur (23) um den Umfang des Verzierungsstreifens (22);
Anordnen des Umfangsflansches des geschäumten Innensohlenrohlings zwischen dem Blatt und dem Verzierungsstreifen (22); und
Festziehen der Zugschnur (23), derart, dass der Verzierungsstreifen (22) fest den geschäumten Innensohlenrohling umschließt.

13. Verfahren nach Anspruch 10, welches weiterhin die Schritte umfasst:
Vorsehen eines vorderen Schutzes (261) an einem ersten Ende der Sohle; und
Vorsehen eines hinteren Schutzes (262) an einem zweiten Ende der Sohle.

14. Verfahren nach Anspruch 10, bei dem der Schritt (h) weiterhin die Schritte umfasst:
Vorsehen von zwei schwenkbar verbundenen Formklemmen (40) um den Außenumfang des geschäumten Innensohlenrohlings zur Bildung von Riffelungen auf dem Außenumfang des geschäumten Innensohlenrohlings zu verpressen;
Vorsehen eines gewellten Umfangsprofils (45) am oberen Rand (46) jeder der beiden Formklemmen (40);
Vorsehen von zwei Seitenformbasen (37), um den geschäumten Innensohlenrohling zu verpressen und am Außenumfang des geschäumten Innenrohlings Riffelungen zu bilden; und
Vorsehen eines gewellten Umfangsprofils (36) an einem unteren Rand jeder der beiden Seitenformbasen (37) und Anpassen des gewellten Umfangsprofils (46) des oberen Randes jedes der beiden Formklemmen (40), um präzise Riffelungen am Außenumfang des geschäumten Innensohlenrohlings zu bilden.

15. Verfahren zum Herstellen von Schuhen mit geschäumten Sohlen, welches die Schritte umfasst:
(a) Bilden eines Schuhleistens (49);
(b) Vorsehen eines erwärmten geschäumten Innensohlenrohlings (54) auf dem Schuhleisten (49), der zwei gegenüberliegende Seiten hat;
(c) Vorsehen von zwei Verbindungsteilen auf jeder der beiden gegenüberliegenden Seiten des geschäumten Innensohlenrohlings (54) ;
(d) Vorsehen einer Sohle (56), die mit Klebstoff beschichtet ist, auf dem geschäumten Innensohlenrohling (54);
(e) Vorsehen einer unteren Formbasis (48) auf der Sohle (56);
(f) Anordnen der Sohle (56) und des geschäumten Innensohlenrohlings (54) zwischen der unteren Formbasis (48) und dem Schuhleisten (49), um die Sohle (56) und den geschäumten Innensohlenrohling (54) zu verpressen und miteinander zu verbinden;
(g) Pressen eines Umfangs des erwärmten geschäumten Innensohlenrohlings (54), um am Umfang des geschäumten Innensohlenrohlings (54) Riffelungen zu bilden; und
(h) Verbinden eines Sandalenblatts (50) mit den Verbindungsteilen des geschäumten Innensohlenrohlings (54), wodurch ein fertiges Schuhprodukt erzeugt wird.

16. Verfahren nach Anspruch 15, bei dem der Schritt (g) weiterhin das Vorsehen von zwei Seitenformbasen (57) umfasst, um den geschäumten Innensohlenrohling (54) zu verpressen und dadurch Riffelungen am Außenumfang des geschäumten Innensohlenrohlings (54) zu bilden.

17. Verfahren nach Anspruch 15, bei dem der Schritt (g) weiterhin das Vorsehen von zwei schwenkbar verbundenen Formen (60) umfasst, um den Umfang des geschäumten Innensohlenrohlings (54) zu verpressen und dadurch am Umfang des geschäumten Innensohlenrohlings Riffelungen zu erzeugen.

18. Verfahren nach Anspruch 15, welches weiterhin die Schritte umfasst:
Vorsehen einer Vielzahl von Schlitzen (53) im Umfang des geschäumten Innensohlenrohlings (54);
Vorsehen einer Vielzahl von Verbindungsplatten (51) am Umfang des Sandalenblatts (50);
Vorsehen einer Zugschnur (52) an jeder der Verbindungsplatten (51);
Bewegen jeder Verbindungsplatte (51), so dass sie sich durch jeden Schlitz (53) des geschäumten Innensohlenrohlings (54) erstreckt;
Biegen der Verbindungsplatten (51), um die Unterseite des geschäumten Innensohlenrohlings (54) zu verpressen; und
Festziehen der Zugschnur (52) jeder der Verbindungsplatten (51), um den geschäumten Innensohlenrohling (54) und das Sandalenblatt (50) fest miteinander zu verbinden.

## Revendications

1. Procédé de fabrication de chaussures à semelles en mousse, comprenant les étapes consistant à :
(a) préparer un mélange susceptible d'être transformé en mousse ;
(b) chauffer et faire mousser ledit mélange susceptible d'être transformé en mousse pour former une ébauche de semelle intérieure en mousse;
(c) préparer une semelle (17) ;
(d) préparer une forme de chaussure (19) ;
(e) placer un dessus (18) sur ladite forme de chaussure (19) ;
(f) placer ladite semelle (17), enduite de colle, ladite ébauche de semelle intérieure en mousse enduite de colle, ledit dessus (18) et ladite forme de chaussure (19) dans un moule de pressage pour les presser et les assembler ;
(g) chauffer localement une périphérie extérieure de ladite ébauche de semelle intérieure en mousse ; et
(h) presser ladite périphérie extérieure de ladite ébauche de semelle intérieure en mousse de manière à former des sculptures sur ladite périphérie extérieure de ladite ébauche de semelle intérieure en mousse en formant ainsi une chaussure constituant le produit final.

2. Procédé selon la revendication 1, comprenant en outre l'étape consistant à :
insérer un coussin d'absorption des chocs (15) dans une cavité (14) définie dans ladite ébauche de semelle intérieure en mousse.

3. Procédé selon la revendication 1, comprenant en outre l'étape consistant à :
appliquer une pluralité de plaques ornementales (151) sur ladite périphérie extérieure de ladite ébauche de semelle intérieure en mousse.

4. Procédé selon la revendication 1, dans lequel ladite étape (b) consiste en outre à chauffer et faire mousser ledit mélange susceptible d'être transformé en mousse pour former un corps en mousse (10) allongé et plat, puis à découper ledit corps en mousse (10) en une pluralité d'ébauches de semelles intérieures en mousse (11).

5. Procédé selon la revendication 1, dans lequel ladite étape (b) consiste encore à transformer ledit mélange susceptible d'être transformé en mousse en une ébauche de semelle intérieure (12) d'une dimension réduite, puis à chauffer et faire mousser ladite ébauche de semelle intérieure (12) pour la transformer en une ébauche de semelle intérieure en mousse (13).

6. Procédé selon la revendication 1, comprenant en outre l'étape consistant à :
introduire une matière susceptible d'être transformée en mousse thermoplastique faite de polyuréthane P.U. entre ladite ébauche de semelle intérieure en mousse et ledit dessus (18).

7. Procédé selon la revendication 1, dans lequel ladite ébauche de semelle intérieure en mousse chauffée peut aussi être placée dans un moule générateur de motifs de manière que ladite ébauche de semelle intérieure en mousse chauffée puisse être pressée pour donner un demi-produit constituant une semelle intérieure en mousse par un processus de pressage de motifs.

8. Procédé selon la revendication 1, dans lequel ladite ébauche de semelle intérieure en mousse peut aussi être réalisée avec une structure creuse à alvéoles remplis d'air, de sorte que, lorsque ladite ébauche de semelle intérieure est placée dans lesdits moules générateurs de motifs, lesdits alvéoles remplis d'air sont gonflés et pressés pour former une semelle intérieure en mousse gonflable.

9. Procédé de fabrication de chaussures à semelles en mousse, comprenant les étapes consistant à :
préparer un mélange susceptible d'être transformé en mousse formé d'éthylène-acétate de vinyle E.V.A., un composant de transformation en mousse, en particulier un agent gonflant, et un liant, en particulier un agent réticulant, qui sont préparés et agités ; chauffer et faire mousser ledit mélange susceptible d'être transformé en mousse pour former une ébauche de semelle intérieure en mousse chauffée ; ladite ébauche de semelle intérieure en mousse étant traitée par une étape initiale génératrice de motifs pour faciliter l'enfoncement d'un coussin amortisseur de chocs dans une cavité définie dans le bord supérieur de ladite ébauche de semelle intérieure en mousse ; préparer une semelle (17) ; préparer une forme de chaussure (19) ; préparer un dessus (18) monté sur ladite forme de chaussure (19) ; placer ladite semelle (17) enduite de colle, ladite ébauche de semelle intérieure en mousse enduite de colle, ledit dessus (18) et ladite forme de chaussure (19) dans un jeu de moules de pressage qu'on peut faire coulisser vers le haut et vers le bas l'un par rapport à l'autre pour presser verticalement et assembler ces éléments de façon que lesdites parties de la chaussure soient intégralement assemblées et mises en forme par pressage ; chauffer une périphérie extérieure de ladite ébauche de semelle intérieure en mousse localement au moyen d'une machine chauffante ; et presser ladite périphérie extérieure de ladite ébauche de semelle intérieure en mousse par deux moules générateurs de motifs latéraux qui se déplacent horizontalement l'un vers l'autre de manière à former des sculptures sur ladite périphérie extérieure de ladite ébauche de semelle intérieure en mousse, en formant ainsi un une chaussure constituant le produit final.

10. Procédé de fabrication de chaussures à semelles en mousse, comprenant les étapes consistant à :
(a) placer un dessus (20, 30) sur une forme de chaussure ;
(b) placer un coussin de face inférieure sur ledit dessus ;
(c) placer une ébauche de semelle intérieure en mousse chauffée (24, 32) sur une face inférieure dudit dessus ;
(d) placer un rebord périphérique (25, 33) sur une périphérie de ladite ébauche de semelle intérieure en mousse (24) ;
(e) placer une semelle (26, 35) enduite de colle sur ladite ébauche de semelle intérieure en mousse (24, 32) ;
(f) placer une base de moule de face inférieure (28, 38) sur ladite semelle ;
(g) placer ladite semelle (26, 35), ladite ébauche de semelle intérieure en mousse (24, 32) et ledit dessus (20, 30) entre ladite base de moule de face inférieure (28, 38) et ladite forme de chaussure pour presser et assembler ladite semelle, ladite ébauche de semelle intérieure en mousse et ledit dessus ; et
(h) presser ladite périphérie de ladite ébauche de semelle intérieure en mousse chauffée (24, 32) de manière à former des sculptures sur ladite périphérie de ladite ébauche de semelle intérieure en mousse, en formant ainsi une chaussure constituant le produit final.

11. Procédé selon la revendication 10, dans lequel ladite étape (h) consiste en outre à prévoir deux bases de moule de côtés (27) pour presser ladite ébauche de semelle intérieure en mousse pour former des sculptures sur ladite périphérie de ladite ébauche de semelle intérieure en mousse.

12. Procédé selon la revendication 10, comprenant en outre les étapes consistant à :
placer une bande ornementale (22) collée sur une périphérie dudit dessus ;
placer une ligne de traction (23) le long d'une périphérie de ladite bande ornementale (22) :
monter ledit rebord périphérique de ladite ébauche de semelle intérieure en mousse entre ledit dessus et ladite bande ornementale (22) ; et
tendre ladite ligne de traction (23) de telle manière que ladite bande ornementale (22) entoure bien ladite ébauche de semelle intérieure en mousse.

13. Procédé selon la revendication 10, comprenant en outre les étapes consistant à:
placer une garde avant (261) sur une première extrémité de ladite semelle ;
placer une garde arrière (262) sur une deuxième extrémité de ladite semelle.

14. Procédé selon la revendication 10, dans lequel ladite étape (h) comprend en outre les étapes consistant à :
prévoir une paire de pinces de moule (40) reliées de façon articulée prévues pour presser ladite périphérie de ladite ébauche de semelle intérieure en mousse pour former des sculptures sur ladite périphérie de ladite ébauche de semelle intérieure en mousse ;
prévoir un profil périphérique ondulé (45) sur un bord supérieur (46) de chacune des pinces de ladite paire de pinces de moule (40) ;
prévoir deux bases de moules de côtés (37) pour presser ladite ébauche de semelle intérieure en mousse pour former des sculptures sur ladite périphérie de ladite ébauche de semelle intérieure en mousse ; et
prévoir un profilé périphérique ondulé (36) sur un bord inférieur de chacune desdites bases de moules de côtés (37) et accoupler ledit profilé périphérique ondulé (46) dudit bord supérieur de chacune des pinces de ladite paire de pinces de moule (40) de manière à former précisément des sculptures sur ladite périphérie de ladite ébauche de semelle intérieure en mousse.

15. Procédé pour fabriquer des chaussures à semelles en mousse, comprenant les étapes consistant à :
(a) prévoir une forme de chaussure (49) ;
(b) prévoir une ébauche de semelle intérieure en mousse chauffée (44) sur ladite forme de chaussure (49) et ayant deux côtés opposés ;
(c) prévoir deux pièces de liaison sur chacun desdits deux côtés opposés de ladite ébauche de semelle intérieure en mousse (44) ;
(d) prévoir une semelle (56) enduite de colle sur ladite ébauche de semelle intérieure en mousse (54) ;
(e) prévoir une base de moule de face inférieure (48) sur ladite semelle (56) ;
(f) placer ladite semelle (56) et ladite ébauche de semelle intérieure en mousse (54) entre ladite base de moule de face inférieure (48) et ladite forme de chaussure (49) pour presser et assembler ladite semelle (56) et ladite ébauche de semelle intérieure en mousse (54) l'une à l'autre ;
(g) presser une périphérie de ladite ébauche de semelle intérieure en mousse chauffée (54) de manière à former des sculptures sur ladite périphérie de ladite ébauche de semelle intérieure en mousse (54) ; et
(h) assembler un dessus de sandale (50) auxdites pièces de liaison de ladite ébauche de semelle intérieure en mousse (54) en formant ainsi une chaussure constituant un produit final.

16. Procédé selon la revendication 15, dans lequel ladite étape (g) consiste encore à prévoir deux bases de moules de côtés (57) pour presser ladite ébauche de semelle intérieure en mousse (54) pour former des sculptures sur ladite périphérie de ladite ébauche de semelle intérieure en mousse (54).

17. Procédé selon la revendication 15, dans lequel ladite étape (g) consiste en outre à prévoir une paire de pinces de moules (60) reliées de façon articulée pour presser ladite périphérie de ladite ébauche de semelle intérieure en mousse (54) pour former des sculptures sur ladite périphérie de ladite ébauche de semelle intérieure en mousse (54).

18. Procédé selon la revendication 15, comprenant en outre les phases consistant à:
prévoir une pluralité de fentes (53.) dans ladite périphérie de ladite ébauche de semelle intérieure en mousse (54) ;
prévoir une pluralité de plaques de liaison (51) sur une périphérie dudit dessus de sandale ( 50) ;
prévoir une ligne de traction (52) sur chacune desdites plaques de liaison (51) ;
déplacer chacune desdites plaques de liaison (51) pour qu'elles s'étendent à travers chacune desdites fentes (53) de ladite ébauche de semelle intérieure en mousse (54) ;
plier chacune des plaques de liaison (51) pour presser un fond de ladite ébauche de semelle intérieure en mousse (54) ; et
tendre ladite ligne de traction (52) de chacune desdites plaques de liaison (51) pour fixer ladite ébauche de semelle intérieure en mousse (54) et ledit dessus de sandale (50) l'une à l'autre.
